# FASCICULE DE BREVET EUROPEEN

(11) **EP 4 628 683 B1**
(45) Date de publication et mention de la délivrance du brevet: **15.07.2026**
(21) Numéro de dépôt: 25166667.3
(22) Date de dépôt: 27.03.2025
(51) Int. Cl.: E04H 4/16

(54) **ROBOT ASPIRATEUR À ESSIEU MOTEUR ET ROUE LIBRE POUR LE NETTOYAGE DE PISCINES**
SAUGROBOTER MIT ANTRIEBSACHSE UND FREILAUF ZUR REINIGUNG VON SCHWIMMBECKEN
SUCTION ROBOT WITH DRIVING AXLE AND FREEWHEEL FOR CLEANING SWIMMING POOLS

(30) Priorité: 03.04.2024 FR 2403410
(43) Date de publication de la demande: 08.10.2025
(73) Titulaire: Kokido Development Limited, Hong Kong (HK)
(72) Inventeur: ROUMAGNAC, Max, 33127 MARTIGNAS SUR JALLE (FR); BRUNEEL, Jean, 999077 KOWLOON (HK)
(74) Mandataire: Santarelli

(56) Documents cités:
- EP-B1- 2 673 429
- FR-A1- 3 041 982
- US-B1- 9 453 355
- US-B2- 10 625 188

## Description

### DOMAINE TECHNIQUE

La présente invention appartient au domaine des dispositifs d'entretien et de nettoyage de piscines, notamment les robots aspirateurs à propulsion autonome, et concerne plus particulièrement un robot aspirateur équipé d'un essieu avec deux roues motrices et d'au moins une roue libre pour un entraînement simple et stabilisé.

### ÉTAT DE L'ART

Au fil des années, la technologie de nettoyage automatique de piscines a connu une multitude d'avancées, les robots aspirateurs autonomes étant devenus prédominants dans ce domaine. Ces robots sont conçus pour se déplacer de manière autonome dans une piscine, en éliminant les débris déposés sur le fond de la piscine. Ils peuvent également être adaptés pour gérer différents types de débris, tels que les feuilles, le sable ou d'autres particules, et peuvent être configurés pour nettoyer différents types de surfaces de piscine, y compris les carreaux, le béton ou le vinyle.

Toutefois, les moyens de propulsion d'un robot donné peuvent avoir une efficacité variable en fonction de la nature des surfaces.

En général, un robot de nettoyage de piscine fonctionne sur un châssis, qui est un cadre qui soutient le robot et ses composants. Le châssis comprend souvent des roues ou des chenilles qui permettent au robot de se déplacer dans la piscine. Certains robots de nettoyage de piscine sont équipés de deux roues ou plus, qui peuvent être entraînées par un moteur pour propulser le robot. Dans certains cas, le châssis peut comprendre des roues ou des chenilles supplémentaires pour une meilleure stabilité ou maniabilité.

La fonction de nettoyage de ces robots est souvent réalisée par un mécanisme d'aspiration. Cela implique généralement une hélice ou un dispositif similaire qui crée un flux d'eau, aspirant les débris de la piscine. Les débris sont généralement capturés dans un filtre situé en amont de l'aspiration, ou plus rarement dans un sac en aval, pour une élimination ultérieure. Dans certains cas, le mécanisme d'aspiration peut comprendre plusieurs hélices ou pompes pour augmenter la puissance d'aspiration. Le filtre ou le sac peut également être conçu avec différents matériaux ou structures pour capturer différentes tailles ou types de débris.

Dans certains modèles, la direction du mouvement du robot est contrôlée par la direction de rotation du moteur qui entraîne les roues. Cela peut être réalisé en inversant la direction de rotation du moteur lors du contact avec un mur ou un autre obstacle, ce qui fait changer de direction au robot. Dans d'autres variations, le robot peut utiliser des capteurs pour détecter la proximité des murs ou des obstacles et ajuster sa direction en conséquence.

De plus, certains robots de nettoyage de piscine comprennent des capteurs ou des minuteries pour contrôler la direction de rotation du moteur. Ceux-ci peuvent être basés sur diverses technologies, telles que des capteurs à effet Hall, des accéléromètres ou des dispositifs de temporisation. Dans certains cas, le robot peut utiliser d'autres types de capteurs, tels que des capteurs optiques, des capteurs ultrasoniques ou des capteurs de pression, pour contrôler son mouvement.

De plus, certains robots de nettoyage de piscine sont équipés de batteries interchangeables, permettant des temps de fonctionnement prolongés. Dans certains cas, le robot peut utiliser d'autres types de sources d'énergie, tels que l'énergie solaire, ou il peut inclure une station de charge pour une recharge automatique.

La plupart des robots automoteurs utilisent deux moteurs de traction associés chacun à une chenille ou paire de roues (droite et gauche). La commande indépendante de chaque moteur permet alors de diriger le robot dans la direction voulue selon une programmation préétablie.

Le document US7849547 (AquaProducts) décrit un nettoyeur de piscines robotique, auto-propulsé, comprenant une première paire de brosses motrices et une seconde paire de brosses libres, montées coaxialement en rotation sur des axes parallèles, aux extrémités opposées du nettoyeur, transversalement à la direction du déplacement. La première paire de brosses est montée sur un côté et est entraînée par un moteur d'entraînement ; la seconde paire de brosses est montée sur le côté opposé du nettoyeur. Un embrayage à retardement, en rotation, est positionné coaxialement entre chaque paire des première et seconde brosses, de telle façon que l'inversion du moteur d'entraînement a pour effet que la première paire de brosses entraînées tourne temporairement à une vitesse de rotation angulaire qui est supérieure à celle de la seconde paire de brosses, de sorte que le pivotement du nettoyeur, consécutif à un changement angulaire prédéterminé de direction, avant la rotation synchronisé de la seconde paire de brosses, est amorcé par la mise en prise de l'embrayage. A la suite de chaque inversion, le nettoyeur se déplace dans une nouvelle direction, le long d'un parcours généralement rectiligne qui est angulairement déplacé par rapport à son premier parcours (trajectoire en zigzag).

Toutefois, cette solution présente une maniabilité limitée en raison de la présence des deux rouleaux, à l'avant et à l'arrière. De plus, les deux brosses motrices sont placées sur un côté latéral du robot, parallèlement à sa direction de déplacement, et peuvent induire un déséquilibre transversale du robot ou, a minima, une manœuvrabilité compliquée. Le document EP2673429B1 divulgue un robot aspirateur de nettoyage de piscines, comportant un châssis, un conduit d'aspiration débouchant dans un sac de filtration placé au-dessus, une hélice placée à l'intérieur dudit conduit pour aspirer des débris via une bouche d'aspiration et les refouler dans le sac de filtration. Le châssis comprend un essieu moteur tractant le robot, l'essieu étant unique et comportant deux roues motrices entraînées par un seul moteur et un axe reliant lesdites roues motrices transversalement au mouvement du robot, le moteur étant configuré pour inverser le sens de rotation du robot au contact d'un mur, ledit robot comportant en outre une troisième roue libre.

### PRÉSENTATION DE L'INVENTION

La présente invention vise à pallier tout ou partie des inconvénients de l'art antérieur exposés ci-avant en proposant une solution simple pour le nettoyage automatiques des piscines avec une maniabilité, une manœuvrabilité et une capacité d'aspiration améliorées.

À cet effet, la présente invention a pour objet un robot aspirateur de nettoyage de piscines, comportant un châssis, un conduit d'aspiration surmontant le châssis et débouchant dans un sac de filtration placé au-dessus, et une hélice placée à l'intérieur dudit conduit pour aspirer des débris via une bouche d'aspiration et les refouler dans le sac de filtration, le châssis comprenant un essieu moteur tractant le robot. Ce robot est remarquable en ce que l'essieu est unique et comporte deux roues motrices entraînées par un seul moteur et un axe reliant lesdites roues motrices transversalement au mouvement du robot, en ce que le moteur est configuré pour inverser son sens de rotation au contact d'un mur, et en ce que ledit robot comporte en outre une troisième roue libre et un système anti-retour placé entre le conduit d'aspiration et le sac de filtration pour éviter que les débris refoulés dans ledit sac ne retombent dans ledit conduit.

En effet, ce robot aspirateur, doté d'un châssis à au moins trois roues avec deux roues motrices sur un même axe actionnées par un seul moteur, offre plusieurs avantages techniques. Sa conception simplifiée réduit les coûts de fabrication et de maintenance. Sa maniabilité améliorée lui permet de naviguer aisément dans des espaces restreints et de contourner les obstacles avec précision. La stabilité accrue garantit un déplacement régulier sur des surfaces variées. De plus, la capacité du moteur à inverser automatiquement le sens de rotation au contact d'un mur lui permet d'identifier et d'éviter les obstacles, assurant un nettoyage sans accroc. En somme, cette configuration optimise l'efficacité et la fiabilité du robot aspirateur, offrant ainsi une solution performante pour le nettoyage des piscines.

Selon un mode de réalisation, l'hélice présente un diamètre d'au moins 80mm, et est dite « de grand diamètre ».

En effet, le choix entre une hélice de grand diamètre et une hélice de petit diamètre a des implications directes sur son efficacité. Une hélice de grand diamètre offre plusieurs avantages techniques. Tout d'abord, elle déplace une plus grande quantité d'eau par tour, ce qui accélère la circulation dans la piscine et permet de nettoyer une plus grande surface en moins de temps. De plus, grâce à sa capacité à générer une force d'aspiration plus importante, elle est plus efficace pour capturer une variété de débris, allant des feuilles aux débris plus fins y compris le sable. Cela réduit également les risques de colmatage, assurant un nettoyage continu sans interruptions fréquentes pour déboucher le système. Enfin, une hélice de grand diamètre contribue à réduire le temps nécessaire pour nettoyer la piscine, ce qui économise de l'énergie et prolonge la durée de vie de la batterie du robot.

Selon un mode de réalisation, le système anti-retour comporte au moins un clapet rigide articulé.

Selon un mode de réalisation, le système anti-retour comporte une valve à plusieurs becs formant un diaphragme s'ouvrant lors de l'aspiration et se fermant à l'arrêt de l'aspiration.

Avantageusement, la troisième roue peut être auto-orientable en fonction du sens du mouvement du robot, ladite roue présentant au moins deux orientations différentes selon que le robot avance ou recule.

Selon un mode de réalisation de l'invention, une roue motrice située du côté opposé au moteur est reliée à l'axe du moteur par un mécanisme d'embrayage retardé, retardant sa mise en rotation par rapport à l'autre roue motrice, et provoquant ainsi un décalage de l'alignement du robot à chaque changement de sens du mouvement du robot entre une marche avant et une marche arrière.

Selon un mode de réalisation, l'axe de l'essieu est monté pivotant d'avant en arrière en fonction du sens de rotation du moteur.

Selon des modes de réalisation, le robot aspirateur peut comporter un capteur à effet Hall placé sur la troisième roue, un capteur inertielle de type accéléromètre ou un dispositif de minuterie, tous configurés pour commander le sens de rotation du moteur.

Selon un mode de réalisation de l'invention, le robot aspirateur comporte en outre deux roues latérales d'un côté et de l'autre de la troisième roue.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif un mode de réalisation d'un robot aspirateur pour le nettoyage de piscines, conforme aux principes de l'invention.

### BRÈVE DESCRIPTION DES FIGURES

Les figures sont données à titre purement illustratif pour une meilleure compréhension de l'invention sans en limiter la portée. Les différents éléments peuvent être représentés de manière schématique et ne sont pas nécessairement à l'échelle. Sur l'ensemble des figures, les éléments identiques ou équivalents portent la même référence numérique.

Il est ainsi illustré en :
- Figure 1 : une vue en perspective de dessus d'un robot aspirateur selon un mode de réalisation de l'invention ;
- Figure 2 : une vue en perspective de dessous du robot aspirateur montrant l'hélice de grand diamètre ;
- Figure 3 : une vue de dessous du robot aspirateur ;
- Figure 4 : une vue arrière du robot aspirateur ;
- Figure 5 : une vue de côté du robot aspirateur ;
- Figure 6 : une vue avant du robot aspirateur ;
- Figure 7 : une coupe selon le plan A - A de la figure 6 ;
- Figure 8 : une vue de dessus du robot aspirateur ;
- Figure 9 : une coupe selon le plan B - B de la figure 8 ;
- Figure 10 : un schéma de déplacement du robot aspirateur dans une piscine, avec une roue motrice retardée induisant des parties en arc de cercle dans la trajectoire ;
- Figure 11 : une vue partielle d'une valve anti-retour à plusieurs becs.

### DESCRIPTION DÉTAILLÉE DE MODES DE RÉALISATION

Il convient de noter que certains éléments techniques bien connus de l'homme du métier sont ici rappelés pour éviter toute insuffisance ou ambiguïté dans la compréhension de la présente invention.

Dans le mode de réalisation décrit ci-après, on fait référence à un robot de nettoyage de piscine, principalement destiné à l'aspiration de débris déposés au fond d'un bassin. Cet exemple, non limitatif, est donné pour une meilleure compréhension de l'invention et n'exclut pas l'adaptation du robot à d'autres applications comme le nettoyage d'autres types de bassins artificiels à fonds durs. Dans la suite de la description, le terme « robot » désigne un robot aspirateur autonome pour le nettoyage de piscine.

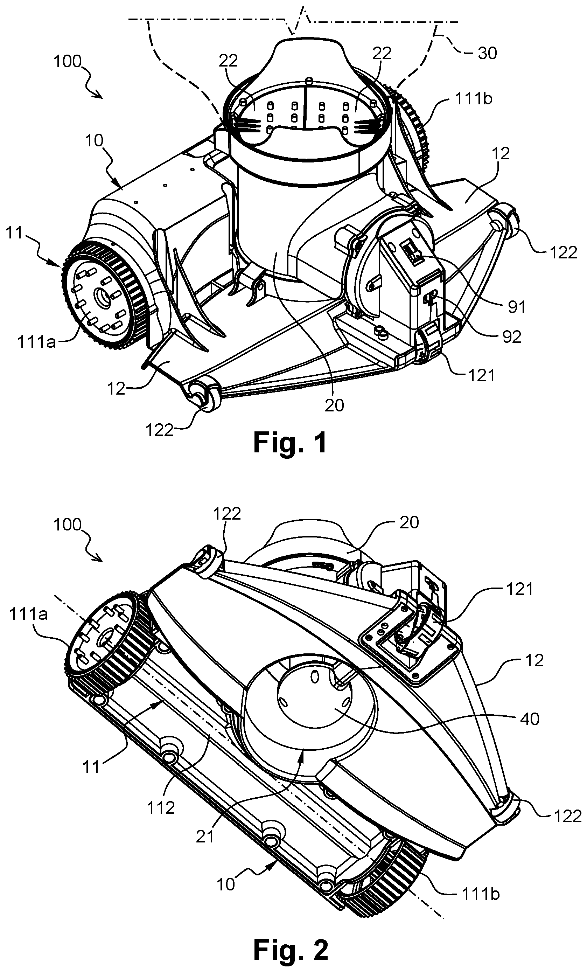

La figure 1 représente un robot 100 de nettoyage de piscine comportant un châssis 10 qui constitue la structure portante principale du robot. Sur ce châssis 10 est monté un conduit d'aspiration 20, par lequel les débris sont aspirés lors de l'utilisation du robot aspirateur 100.

Un sac de filtration 30, représenté en trait interrompu sur la figure 1, est prévu pour collecter et retenir les débris aspirés par le conduit d'aspiration 20. Le châssis 10 est également équipé d'un essieu moteur 11, qui supporte deux roues motrices coaxiales : une première roue motrice 111a et une deuxième roue motrice 111b. Ces roues motrices sont actionnées par un moteur de traction 50 (non visible sur la figure 1) pour propulser le robot aspirateur 100.

Le châssis 10 présente une partie aplatie 12, dont la conception peut varier selon les besoins spécifiques, tels que la réduction de la résistance à l'eau ou l'accommodation d'autres composants. Une troisième roue libre 121 est également présente, permettant une rotation libre pour améliorer la manœuvrabilité du robot aspirateur 100. Des roues latérales 122 sont disposées sur les côtés du châssis 10 pour augmenter la stabilité du robot aspirateur 100 lors de son déplacement.

Le conduit d'aspiration 20 comporte en outre un clapet anti-retour 22, situé à la base du sac de filtration 30 pour empêcher les débris de retourner dans l'eau après avoir été aspirés.

Le clapet anti-retour 22, selon le mode de réalisation de la figure 1, comporte deux parties rigides articulées sur un axe diamétral du conduit 20.

Alternativement, le clapet anti-retour peut comporter une seule partie rigide articulée.

La figure 2 dévoile une vue en perspective de dessous du robot aspirateur 100, complétant ainsi la vue de la figure 1. Cette vue expose des éléments additionnels essentiels au fonctionnement de l'aspiration et de la mobilité du robot.

Sous le robot aspirateur 100 se trouve une hélice 40 de grand diamètre. La rotation de l'hélice 40 permet de générer un courant d'eau qui facilite le transport des débris vers le conduit d'aspiration 20, via une bouche d'aspiration 21.

L'axe 112 est un composant mécanique qui relie les deux roues motrices, 111a et 111b, dans l'essieu moteur 11. Cet axe est fondamental pour la transmission de la puissance du moteur de traction aux roues, assurant ainsi une propulsion coordonnée et stable du robot aspirateur 100 sur le sol de la piscine.

La bouche d'aspiration 21 est l'orifice situé à la partie inférieure du conduit d'aspiration 20. C'est par cette ouverture que les débris sont captés du fond de la piscine. La bouche d'aspiration 21 est conçue pour maximiser l'efficacité de l'aspiration tout en minimisant le risque de blocage par des débris de taille importante.

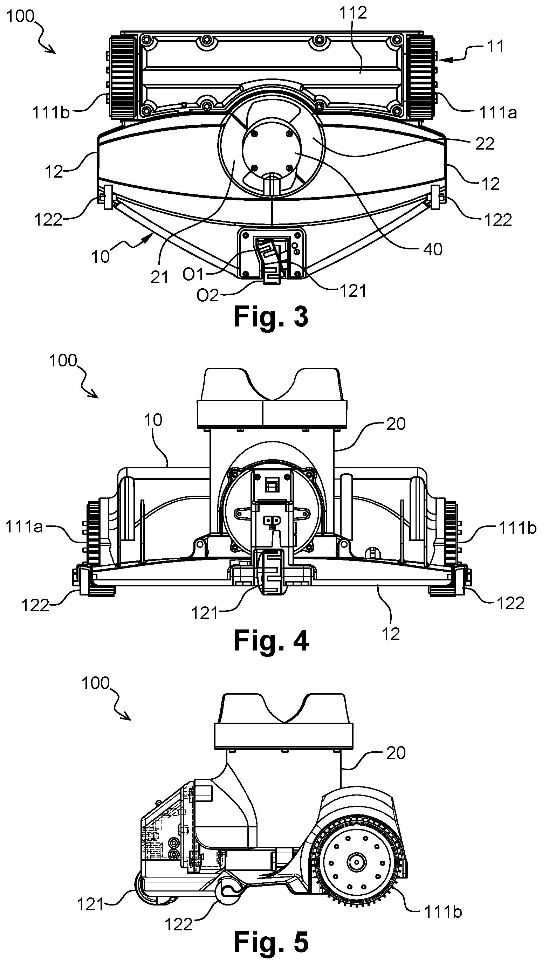

La figure 3 représente une vue de dessous du robot aspirateur 100, mettant en évidence la configuration de la troisième roue libre 121 et son mécanisme d'orientation. Cette vue est essentielle pour comprendre le fonctionnement de la troisième roue libre 121, qui joue un rôle clé dans la manœuvrabilité du robot aspirateur 100.

La troisième roue libre 121 est conçue pour pivoter et adopter au moins deux orientations distinctes, O1 et O2, qui sont visibles sur cette figure. Ces orientations correspondent respectivement aux modes de déplacement en avant et en arrière du robot aspirateur. Lorsque le robot avance (orientation O1), la roue libre 121 s'oriente de manière à faciliter ce mouvement, tandis que lorsqu'il recule (orientation O2), la roue s'ajuste pour permettre une manœuvre aisée dans cette direction.

Le mécanisme d'orientation de la troisième roue libre 121 est conçu pour répondre automatiquement au changement de direction du robot aspirateur. Cette caractéristique améliore la navigation du robot aspirateur 100 en lui permettant de contourner les obstacles et de changer de direction avec une plus grande fluidité. La figure 3 illustre également comment la troisième roue libre 121 est montée sur le châssis 10 du robot aspirateur 100. La roue est positionnée de manière à ce qu'elle puisse pivoter librement autour de son axe, ce qui est essentiel pour les deux orientations O1 et O2.

Les figures 4 et 5 représentent respectivement une vue arrière et une vue de côté du robot aspirateur 100, mettant en lumière les roues latérales 122 et leur contribution à la stabilité de l'appareil. Ces roues latérales 122 sont disposées de chaque côté de la troisième roue libre 121 et sont conçues pour augmenter la stabilité latérale du robot aspirateur lors de ses déplacements.

Les roues latérales 122 jouent un rôle essentiel en empêchant le basculement du robot aspirateur 100 lorsqu'il se déplace sur des surfaces inégales ou lorsqu'il change de direction. Leur positionnement et leur dimensionnement sont étudiés pour offrir un soutien adéquat sans compromettre la manœuvrabilité ou l'efficacité du nettoyage.

En outre, les roues latérales 122 peuvent également contribuer à la répartition uniforme du poids du robot aspirateur 100, ce qui est particulièrement avantageux lors de l'aspiration de débris sur des pentes ou des contours de piscine. Cette répartition du poids assure que la bouche d'aspiration 21 reste en contact étroit avec la surface de la piscine pour une aspiration maximale.

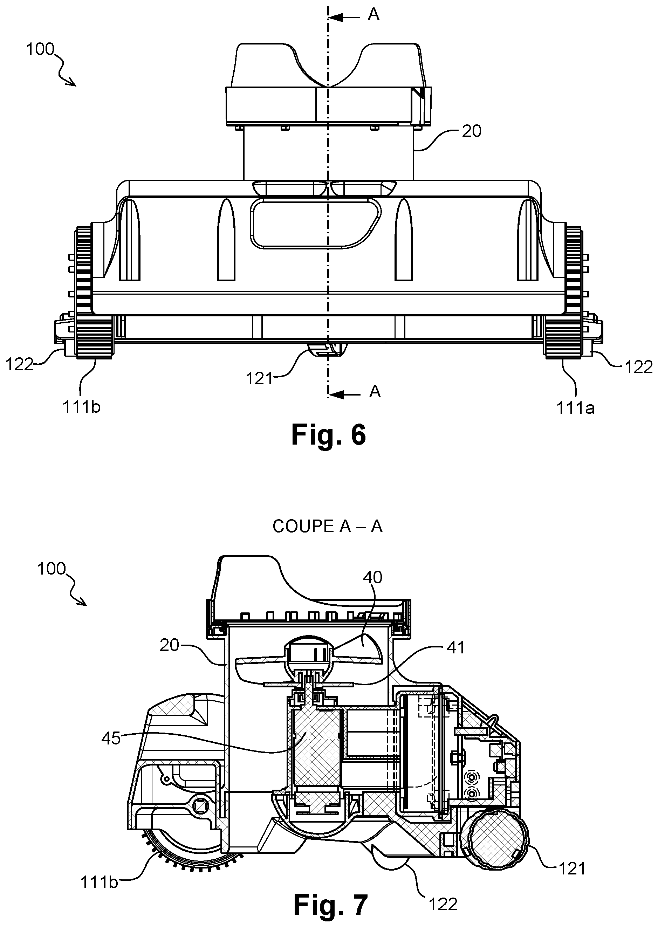

La figure 7 illustre une coupe transversale du robot aspirateur 100 selon le plan A - A de la figure 6, révélant des éléments internes non visibles dans les vues extérieures. Cette vue en coupe est particulièrement utile pour comprendre l'agencement des composants internes et leur fonctionnement.

Au cœur du système d'aspiration, nous trouvons le moteur 45 de l'hélice 40, qui est responsable de la rotation de l'hélice. Ce moteur est conçu pour fournir la puissance nécessaire pour générer un courant d'eau suffisant pour aspirer les débris du fond de la piscine et les acheminer vers le sac de filtration 30 à travers le conduit d'aspiration 20.

Juste en dessous de l'hélice 40 se situe le déflecteur central 41, une pièce cruciale qui joue un rôle double. Premièrement, il empêche les débris de s'accumuler directement sous l'hélice, ce qui pourrait entraver son fonctionnement et réduire l'efficacité de l'aspiration. Deuxièmement, le déflecteur central 41 dirige le flux d'eau vers les parois internes du conduit d'aspiration 20, aidant à propulser les débris vers le sac de filtration 30.

Un tel déflecteur est décrit dans le brevet EP3832053 au nom du demandeur.

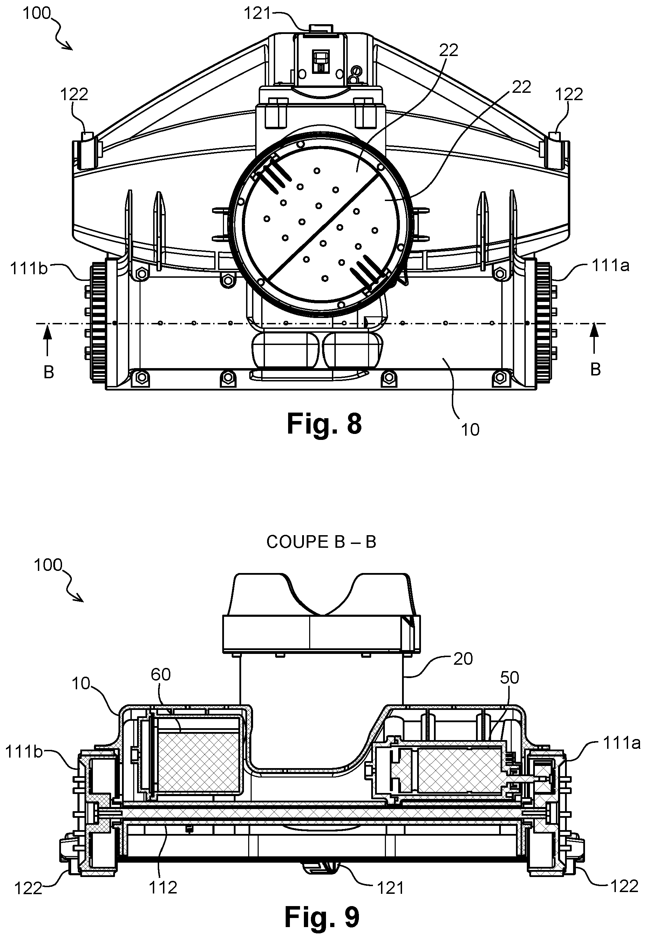

La figure 9 présente une coupe selon le plan B - B de la figure 8, offrant une vue détaillée de l'agencement interne du robot aspirateur 100, en particulier du système de propulsion et de l'alimentation électrique.

Le moteur de traction 50 est un élément essentiel du robot aspirateur 100, fournissant la force motrice nécessaire pour déplacer l'appareil. Il est connecté à l'essieu moteur 11 et est responsable de l'entraînement des roues motrices 111a et 111b. Le moteur de traction 50 est conçu pour inverser son sens de rotation, ce qui permet au robot aspirateur de changer de direction lorsqu'il rencontre un obstacle, comme un mur de la piscine.

Le sens de la rotation du moteur 50, et par conséquent le mouvement du robot, peut être contrôlée par divers moyens. Dans certains cas, un capteur Hall sur la roue libre 121 ou un capteur de type accéléromètre peut être utilisé. Dans d'autres cas, une minuterie peut être utilisée. Ces systèmes de contrôle peuvent offrir l'avantage d'un contrôle précis et adaptable du mouvement, améliorant la capacité du robot à nettoyer automatiquement et efficacement différentes zones de la piscine.

La batterie électrique 60 est la source d'alimentation du robot aspirateur 100. Elle est placée à l'intérieur du châssis 10 dans un compartiment étanche pour équilibrer le poids et maximiser la stabilité du robot pendant son fonctionnement. La batterie électrique 60 est conçue pour fournir une autonomie suffisante pour permettre au robot de nettoyer une piscine sans interruption.

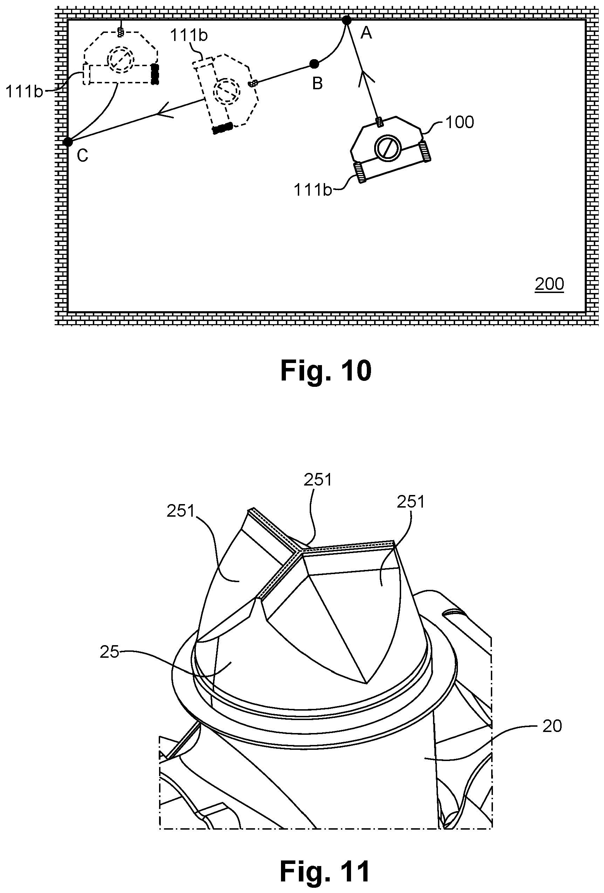

L'axe 112 relie les deux roues motrices 111a et 111b et joue un rôle fondamental dans la transmission de la puissance du moteur de traction 50. Un mécanisme d'embrayage retardé est intégré à cet axe, en particulier sur la roue motrice 111b située du côté opposé au moteur de traction 50. Ce mécanisme est conçu pour retarder la mise en rotation de la roue motrice 111b par rapport à la roue motrice 111a. Ce retard dans l'activation de la roue motrice 111b provoque un décalage de l'alignement du robot aspirateur 100 lors des changements de direction entre une marche avant et une marche arrière, induisant ainsi des parties en arc de cercle dans la trajectoire du robot, comme illustré sur la figure 10.

Cette conception avec un mécanisme d'embrayage retardé sur l'axe 112 contribue à améliorer la manœuvrabilité du robot aspirateur 100 et à augmenter l'efficacité du nettoyage en permettant au robot de couvrir une plus grande surface de la piscine sans laisser de zones non nettoyées.

La figure 10 illustre un schéma de déplacement du robot aspirateur 100 au fond d'une piscine 200, mettant en évidence la trajectoire suivie par le robot lors de son opération de nettoyage. La trajectoire est caractérisée par une série d'arcs de cercle AB, qui sont le résultat direct de l'activation retardée de la roue motrice retardée 111b, prolongés par des parties rectilignes BC.

Les arcs de cercle AB sont générés chaque fois que le robot aspirateur 100 change de direction, et ce sur une courte période par rapport aux parties rectilignes BC. Lorsque le robot effectue une marche avant et qu'il est nécessaire de changer de direction, par exemple après avoir rencontré un mur de la piscine, le mécanisme d'embrayage retardé intégré à l'axe 112 retarde la mise en rotation de la roue motrice 111b par rapport à la roue motrice 111a. Ce retard crée un décalage dans l'alignement du robot, ce qui induit le robot à suivre une trajectoire en arc de cercle AB au lieu d'un virage serré ou d'une inversion de direction en ligne droite.

Cette caractéristique de déplacement en arcs de cercle permet au robot aspirateur 100 de décaler progressivement sa direction de nettoyage, assurant ainsi une meilleure couverture du fond de la piscine 200. Grâce à cette méthode de navigation, le robot est capable de nettoyer plus efficacement en évitant de passer plusieurs fois au même endroit et en réduisant les zones non nettoyées. La trajectoire en arcs de cercle AB contribue donc à une répartition plus uniforme du nettoyage et à une utilisation plus efficace du temps de fonctionnement du robot. En somme, la figure 10 démontre l'efficacité du mécanisme d'embrayage retardé sur l'axe 112 dans l'amélioration de la manœuvrabilité et de la couverture de nettoyage du robot aspirateur 100, en illustrant comment les arcs de cercle AB permettent au robot de modifier sa trajectoire pour une couverture complète et systématique du fond de la piscine 200.

La figure 11 représente un mode de réalisation dans lequel le clapet anti-retour est remplacé par une valve 25 à plusieurs becs 251, agissant comme un diaphragme. En effet, le diaphragme est composé de plusieurs volets ou becs 251. Ces becs 251 sont conçus pour s'ouvrir et se fermer de manière synchronisée pour permettre le passage de l'eau aspirée chargée de débris dans une seule direction à travers le conduit d'aspiration 20.

Lorsque le robot aspire, la pression augmente dans le conduit 20 situé en amont de la valve 25. Cette pression supplémentaire pousse les becs 251 du diaphragme à s'ouvrir, permettant au débris aspirés de passer à travers le conduit pour finir dans le sac de filtration.

Après que l'eau « sale » a traversé la valve et que l'aspiration s'arrête, la pression diminue. Cela entraîne la fermeture des becs 251 du diaphragme, empêchant les débris de refluer dans le conduit d'aspiration.

## Revendications

1. Robot aspirateur (100) de nettoyage de piscines, comportant un châssis (10), un conduit d'aspiration (20) surmontant le châssis et débouchant dans un sac de filtration (30) placé au-dessus, et une hélice (40) placée à l'intérieur dudit conduit pour aspirer des débris via une bouche d'aspiration (21) et les refouler dans le sac de filtration, le châssis comprenant un essieu (11) moteur tractant le robot, l'essieu (11) étant unique et comportant deux roues motrices (111a, 111b) entraînées par un seul moteur (50), et un axe (112) reliant lesdites roues motrices transversalement au mouvement du robot, le moteur (50) étant est configuré pour inverser son sens de rotation au contact d'un mur, ledit robot comportant en outre une troisième roue (121) libre et un système anti-retour (22, 25) placé entre le conduit d'aspiration (20) et le sac de filtration (30) pour éviter que les débris refoulés dans ledit sac ne retombent dans ledit conduit.

2. Robot aspirateur selon la revendication 1, dans lequel le système anti-retour comporte au moins un clapet rigide articulé (22).

3. Robot aspirateur selon la revendication 1, dans lequel le système anti-retour comporte une valve (25) à plusieurs becs (251) formant un diaphragme s'ouvrant lors de l'aspiration et se fermant à l'arrêt de l'aspiration.

4. Robot aspirateur selon l'une quelconque des revendications précédentes, dans lequel la troisième roue (121) est auto-orientable en fonction du sens du mouvement du robot, ladite roue présentant au moins deux orientations différentes (O1, O2) selon que le robot avance ou recule.

5. Robot aspirateur selon l'une quelconque des revendications précédentes, dans lequel une roue motrice (111b) située du côté opposé au moteur (50) est reliée à l'axe (112) du moteur par un mécanisme d'embrayage retardé, retardant sa mise en rotation par rapport à l'autre roue motrice (111a), et provoquant ainsi un décalage de l'alignement du robot à chaque changement de sens du mouvement du robot entre une marche avant et une marche arrière.

6. Robot aspirateur selon l'une quelconque des revendications précédentes, dans lequel l'axe (112) de l'essieu (11) est monté pivotant d'avant en arrière en fonction du sens de rotation du moteur (50).

7. Robot aspirateur selon la revendication 1, comportant un capteur à effet Hall placé sur la troisième roue (121) et configuré pour commander le sens de rotation du moteur (50).

8. Robot aspirateur selon la revendication 1, comportant un capteur inertiel de type accéléromètre configuré pour commander le sens de rotation du moteur (50).

9. Robot aspirateur selon la revendication 1, comportant un dispositif de minuterie configuré pour commander le sens de rotation du moteur (50).

10. Robot aspirateur selon l'une quelconque des revendications précédentes, comportant en outre deux roues latérales (122) d'un côté et de l'autre de la troisième roue (121).

## Patentansprüche

1. Saugroboter (100) zur Reinigung von Schwimmbädern, der ein Gestell (10), eine Saugleitung (20), der das Gestell übersteigt und in einen darüber angeordneten Filterbeutel (30) mündet, und einen Propeller (40), der im Inneren der Leitung angeordnet ist, aufweist, um Ablagerungen über einen Saugstutzen (21) anzusaugen und in den Filterbeutel zu befördern, wobei das Gestell eine motorisierte Antriebsachse (11) umfasst, die den Roboter antreibt, wobei die Antriebsachse (11) einzeln ist und zwei Antriebsräder (111a, 111b), die von einem einzigen Motor (50) angetrieben werden, und eine Achse (112) umfasst, die die Antriebsräder quer zur Bewegung des Roboters verbindet, wobei der Motor (50) so ausgebildet ist, dass er seine Drehrichtung bei Berührung mit einer Wand umkehrt, wobei der Roboter weiter ein drittes freies Rad (121) und ein Rückschlagsystem (22, 25) aufweist, das zwischen der Saugleitung (20) und dem Filterbeutel (30) angeordnet ist, um zu verhindern, dass die in den Beutel beförderten Ablagerungen in die Leitung fallen.

2. Saugroboter nach Anspruch 1, wobei das Rückschlagsystem mindestens eine gelenkige starre Klappe (22) aufweist.

3. Saugroboter nach Anspruch 1, wobei das Rückschlagsystem ein Ventil (25) mit mehreren Düsen (251) aufweist, die eine Membran bilden, die sich beim Ansaugen öffnet und beim Abschalten des Ansaugens schließt.

4. Saugroboter nach einem der vorhergehenden Ansprüche, wobei das dritte Rad (121) in Abhängigkeit von der Bewegungsrichtung des Roboters selbstausrichtend ist, wobei das Rad mindestens zwei verschiedene Ausrichtungen (O1, O2) aufweist, je nachdem, ob der Roboter vorwärts oder rückwärts fährt.

5. Saugroboter nach einem der vorhergehenden Ansprüche, wobei ein Antriebsrad (111b), das sich auf der gegenüberliegenden Seite des Motors (50) befindet, über einen verzögerten Kupplungsmechanismus mit der Achse (112) des Motors verbunden ist, wodurch seine Drehung in Bezug auf das andere Antriebsrad (111a) verzögert wird und somit eine Verschiebung der Ausrichtung des Roboters bei jedem Wechsel der Bewegungsrichtung des Roboters zwischen einem Vorwärts- und einem Rückwärtsgang verursacht wird.

6. Saugroboter nach einem der vorhergehenden Ansprüche, wobei die Achse (112) der Antriebsachse (11) entsprechend der Drehrichtung des Motors (50) vorwärts und rückwärts schwenkbar montiert ist.

7. Saugroboter nach Anspruch 1, der einen Hall-Effekt-Sensor aufweist, der auf dem dritten Rad (121) angeordnet und so ausgebildet ist, dass er die Drehrichtung des Motors (50) steuert.

8. Saugroboter nach Anspruch 1, der einen Trägheitssensor vom Typ Beschleunigungsmesser aufweist, der so ausgebildet ist, dass er die Drehrichtung des Motors (50) steuert.

9. Saugroboter nach Anspruch 1, der eine Timervorrichtung aufweist, die so ausgebildet ist, dass sie die Drehrichtung des Motors (50) steuert.

10. Saugroboter nach einem der vorhergehenden Ansprüche, weiter umfassend zwei Seitenräder (122) auf beiden Seiten des dritten Rads (121).

## Claims

1. A robotic pool cleaning vacuum (100), comprising a chassis (10), a suction duct (20) topping the chassis and opening into a filter bag (30) placed above, and an impeller (40) placed inside said duct to suck up debris via a suction port (21) and push it into the filter bag, the chassis comprising a motor axle (11) towing the robot, the axle (11) being single and comprising two drive wheels (111a, 111b) driven by a single motor (50), and an axis (112) connecting said drive wheels transversely to the movement of the robot, the motor (50) being configured to invert its direction of rotation in contact with a wall, said robot further comprising a third, free wheel (121) and a non-return system (22, 25) placed between the suction duct (20) and the filter bag (30) to prevent the debris pushed into said bag from falling back into said duct.

2. The robotic vacuum cleaner according to claim 1, wherein the non-return system comprises at least one hinged rigid flap (22).

3. The robotic vacuum cleaner according to claim 1, wherein the non-return system comprises a valve (25) with several spouts (251) forming a diaphragm which opens during suction and closes when suction is stopped.

4. The robotic vacuum cleaner according to any one of the preceding claims, wherein the third wheel (121) is self-steering according to the direction of movement of the robot, said wheel having at least two different orientations (01, O2) depending on whether the robot is moving forward or backward.

5. The robotic vacuum cleaner according to any one of the preceding claims, wherein a drive wheel (111b) located on the opposite side of the motor (50) is connected to the axis (112) of the motor by a delayed clutch mechanism, delaying its rotation with respect to the other drive wheel (111a), and thus causing an offset of the alignment of the robot at each change of direction of the movement of the robot between a forward movement and a backward movement.

6. The robotic vacuum cleaner according to any one of the preceding claims, wherein the axis (112) of the axle (11) is mounted so as to pivot back and forth according to the direction of rotation of the motor (50).

7. The robotic vacuum cleaner according to claim 1, comprising a Hall effect sensor placed on the third wheel (121) and configured to control the direction of rotation of the motor (50).

8. The robotic vacuum cleaner according to claim 1, comprising an accelerometer type inertial sensor configured to control the direction of rotation of the motor (50).

9. The robotic vacuum cleaner according to claim 1, comprising a timer device configured to control the direction of rotation of the motor (50).

10. The robotic vacuum cleaner according to any one of the preceding claims, further comprising two lateral wheels (122) on either side of the third wheel (121).
